# EUROPÄISCHE PATENTSCHRIFT

(11) **EP 0 905 482 B1**
(45) Veröffentlichungstag und Bekanntmachung des Hinweises auf die Patenterteilung: **24.11.2004**
(21) Anmeldenummer: 98112920.8
(22) Anmeldetag: 11.07.1998
(51) Int. Cl.: G01C 21/20, A01B 79/00, G06T 17/50

(54) **Verfahren zur computergestützten Kartierung**
Method for computer assisted cartography
Méthode pour la cartographie assistée par ordinateur

(30) Priorität: 26.09.1997 DE 19742463
(43) Veröffentlichungstag der Anmeldung: 31.03.1999
(73) Patentinhaber: CLAAS Selbstfahrende Erntemaschinen GmbH, 33428 Harsewinkel (DE)
(72) Erfinder: Böttinger, Stefan, Dr., 33647 Bielefeld (DE)

(56) Entgegenhaltungen:
- DE-A- 4 223 585
- DE-A- 19 532 870

## Beschreibung

Die Erfindung betrifft eine Verfahren zur computergestützten Kartierung georeferenzierter Meßgrößen, insbesondere landwirtschaftliche Ertragsgrößen, die in einem Schlag, insbesondere entlang von Fahrspuren, mit einer Erhebungsvorrichtung, z.B. einer Erntevorrichtung, einzelnen Meßpositionen zugeordnet erhoben worden sind, wobei aus den Meßpositionen eine möglichst gute Annäherung an einem Schlaggrenzverlauf erzeugt wird und dann diese berücksichtigend die erhobenen Meßgrößen Knotenpunkten eines Koordinatennetzes anteilig als Repräsentationsgrößen zugemessen werden.

Bekanntlich werden zu kartierende flächenbezogene Meßdaten im Gelände, zugeordneten zu den Koordinaten einzelner Meßpositionen, jeweils für einen Schlag erhoben, und aus dieser Erhebung wird softwaregestützt mit einem Computer eine Kartendarstellung der Verteilung der georeferenzierten Meßgrößen erzeugt, wobei ein gedachtes x-y-Koordinatennetz über der zu kartierenden Fläche aufgespannt wird und den Netzknotenpunkten aus den Meßdaten der benachbarten Meßpositionen passende Repräsentationsgrößen zugeordnet werden. Hierzu kommen verschiedene Verfahren einzeln oder kombiniert zur Anwendung wie eine Mittelwertbildung, eine gewichtete Mittelwertbildung, eine Interpolation oder Extrapolationen oder ein geostatisches Verfahren wie das Kriging-Verfahren. Eine sachgerechte Anwendung dieser Verfahren erfordert es, daß die Schlaggrenzen jeweils insoweit bekannt sind, daß die Zugehörigkeit der einzelnen Netzknotenpunkte zum Schlag oder zum externen Bereich bekannt ist. Zur Eingabe der Verläufe der Schlaggrenzen in den Computer werden beispielsweise diese an einem grafischen Eingabegerät von Hand eingezeichnet, was vor allem bei großen Schlägen viel Zeit und Geduld erfordert. Zur Verringerung des jeweils erforderlichen Arbeitsaufwandes wird häufig auf bereits früher in einer Datenbank abgespeicherte Daten von Verläufen der Schlaggrenzen zurückgegriffen, die jedoch insoweit aktualisiert werden müssen, als agrartechnische Änderungen der Schlaggrenzen, z.B. wegen Bewirtschaftungsschwierigkeiten, wie Unbefahrbarkeit des Bodens bei der Bestellung oder unzureichende Ertragsfähigkeit, vorgenommen wurden. Auch dies erfordert große Sach- und Ortskenntnis des erhebenden und des eingebenden Kartierers.

Auch wurde eine computergestützte Kartierung der flächenbezogenen Meßdaten ohne eine gesonderte Eingabe des Verlaufs einer Schlaggrenze sondern durch deren Annäherung mit Hüllverfahren vorgenommen. Hierbei sind jedoch erhebliche Ungenauigkeiten im äußeren Grenzverlauf aufgetreten, und innere Grenzverläufe in nicht erhebbaren Bereichen wurden nicht berücksichtigt.

Es ist Aufgabe der Erfindung, eine wesentlich genauere und vollständige Ermittlung der Schlaggrenzverläufe zu erbringen.

Die Lösung besteht darin, daß für alle Paare benachbarter Meßpositionen rechnerisch entsprechend diesen berührenden Testarealen, insbesondere Testkreisen, geprüft wird, ob keine weitere Meßposition in dieses fällt, oder für alle Meßpositionen in Fahrspuren rechnerisch entsprechend mit diese Meßpositionen umgebenden Testarealen, insbesondere Testkreisen, geprüft wird, ob sie jeweils an mindestens einer Seite keine andere Fahrspur schneiden, wobei die Testareale jeweils Testabmessungen, insbesondere einen Testradius, aufweisen, die um einen vorgesehenen Toleranzwert über einem Abstand von benachbarten Meßpositionen oder Fahrspuren liegen, und daß alle solche Meßpositionen, bei denen das genannte Testkriterium erfüllt ist, als Grenzpositionen deklariert werden und deren Grenzseite testgemäß bestimmt wird und aus der Folge benachbarter Grenzpositionen die bestmögliche Annäherung an den Äußeren und ggf. inneren Grenzverlauf bestimmt wird.

Vorteilhafte Ausgestaltungen sind in den Unteransprüchen angegeben.

Die Erfindung geht von der Erkenntnis aus, daß die Erhebung der georeferenzierten Größe jeweils für die Gesamtfläche eines Schlages erfolgt. Wird beispielsweise der Ernteertrag gemessen, so wird die gesamte Fläche des Schlages bis zur Schlaggrenze abgeerntet und dabei im Verlauf des Fahrweges, beispielsweise des Erntegerätes, an den einzelnen Meßorten der jeweils im letzten Fahrwegabschnitt erbrachte Ertrag den dort gemessenen Ortskoordinaten zugeordnet registriert. Ebenso können bei der Bestellung oder Bearbeitung des Schlages entlang des Fahrweges jeweiligen Meßorten zugeordnet Meßwerte erhoben werden, wobei der Schlag von der Bearbeitung insgesamt abgedeckt wird.

Aus den auf dem Fahrweg erfaßten Ortskoordinaten der Meßpositionen wird der Verlauf der jeweils benachbarten Fahrwegabschnitte ermittelt und daraus deren Abstand, d.h. die Arbeitsbreite bestimmt, und aus einem Abstandsgrenzwertvergleich werden jeweils bei einer Grenzwertüberschreitung die grenznahen Fahrwegabschnitte und damit die beste Annäherung an den Grenzverlauf bestimmt.

Das Verfahren ermöglicht nicht nur einen äußeren Grenzverlauf genau festzulegen, sondern erbringt durch die Analyse auf Konvergenzen und Divergenzen der benachbarten Fahrwegschnitte auch die Lage innerer Grenzen zu eingeschlossenen unbearbeiteten Bereichen.

Nach dem Ermitteln der besten Annäherung an die Schlaggrenze(n) erfolgt die Zuordnung der Meßdaten zu den Knotenpunkten des Koordinatennetzes unter Berücksichtigung des Grenzverlaufs und die Kartenausgabe.

Eine Vervollkommnung dieses Verfahrens ist dann gegeben, wenn der jeweilige Arbeitsbereich der Landmaschine entsprechend dem Abstand der benachbarten Fahrspuren entweder durch Eingaben des Fahrzeugbedieners oder durch eine laufende Arbeitsbreitenmessung jeweils miterhoben wird, so daß die örtliche Arbeitsbreite dann als weitere bekannte Größe ins Kalkül zur Abstandsgrenzwertbestimmung und der bestmöglichen Annäherung an den Schlaggrenzverlauf eingeführt wird.

Der Abstandsgrenzwert, der zur Überprüfung dient, ob eine Fahrspur eine Grenzfahrspur ist, ist etwas größer als die Arbeitsbreite zu wählen, damit Toleranzen der Spurhaltung beim Fahren über das Feld bei gekrümmten Bahnverläufen und bei der Ortsmessung nicht zu einer irrtümlichen Grenzlagenanzeige führen. Im einzelnen ist eine Toleranzzugabe von 20% je Bahnspur, also für die beiden benachbarten Spuren von insgesamt 40% der einzelnen Arbeitsbreite vorgesehen. So kann, wenn das Arbeitsgerät ein Mähdrescher mit 9 m Breite ist, etwa 12,5 m als Abstandsgrenzwert vorgegeben werden. Ist also ein Meßpunkt mehr als 12,5 m von der benachbarten Fahrspur, die sich aus der Folge der benachbarten Meßpunktlagen ergibt, entfernt, so liegt ein Grenzspurpunkt vor.

Da die Schläge i.e. in ihrer Breite nicht einem ganzen Vielfachen einer Arbeitsbreite entsprechen, sondern gewöhnlich auch schräg zueinander verlaufende Grenzen aufweisen, ist oft die Arbeitsbreite auf der Grenzfahrspur nicht voll genutzt. Deshalb ergibt sich eine vorteilhafte Verbesserung des Verfahrens, wenn bei der Erfassung der Meßwerte, insbesondere der Ertragsmeßwerte, auch die jeweilige lokale Arbeitsbreite miterfaßt wird und dieser gemäß der Abstandsgrenzwerte jeweils gewählt wird und insbesondere die beste Annäherung des Grenzverlaufes an die Grenzspurpunkte unter Berücksichtigung der lokalen Arbeitsbreite errechnet wird.

Eine weitere Erhöhung der Genauigkeit der Grenzverlaufsbestimmung wird erreicht, wenn die Lage der Ortungsvorrichtung, d.h. der Empfangsantenne, bezüglich der Lage des Arbeitsbereiches und der Arbeitsbreite an der Erhebungsvorrichtung berücksichtigt werden.

Dies ist sowohl bei der Bestimmung des Abstandsgrenzwertes als auch bei der Bestimmung des Grenzverlaufes bedeutsam.

Befindet sich die Antenne exzentrisch zum Arbeitsbereich der Erhebungsvorrichtung, so ergibt sich beim Hin- und Herfahren auf einem Schlag abwechselnd ein um die doppelte Exzentrizität verengter oder erweiterter Abstand der Spuren der Meßorte.

Demgemäß ist der Abstandsgrenzwert bei gegenläufigen Fahrspuren entsprechend der Lage der Exzentrizität zur Fahrtrichtung kleiner oder größer als die berücksichtigte Arbeitsbreite mit dem Toleranzzuschlag festzulegen. Außerdem ist die Näherungsberechnung des Grenzverlaufes unter Berücksichtigung der Exzentrizität in Bezug auf die Fahrtrichtung vorzunehmen und zu verbessern.

Eine Exzentrizität der Ortsbestimmung, also der Antennenlage, zum jeweiligen Arbeitsbereich wird vorteilhaft direkt bei der Koordinaten- und Meßwerterfassung berücksichtigt, indem die georteten Koordinatenwerte jeweils zum jeweiligen Arbeitsbereich zentriert, also entsprechend der Breite und der Lage des Arbeitsbereiches zur Antenne korrigiert, abgespeichert werden. Wird die Korrektur des Meßortes sofort vor Ort vorgenommen, so erübrigt sich eine gesonderte Abspeicherung der Lagedaten des Arbeitsbereichs bei der Erfassung der Meßdaten, der Koordinatenwerte und der Arbeitsbreite. Der Abstandsgrenzwert zur Grenzspurlagenermittlung ergibt sich dann stets aus der Summe der halben Arbeitsbreiten der benachbarten gespeicherten Meßpunktspuren zzgl. des Toleranzzuschlages. Für die Annäherung des Grenzverlaufes ist die halbe Arbeitsbreite des grenzseitigen gespeicherten Meßpunktespurenverlaufs zu berücksichtigen.

Die praktische Feldbearbeitung mit einem Mähdrescher, der bevorzugt der Meßdaten- und Koordinatenerfassung dient, wird gewöhnlich mit einer oder mehreren Umrunduhgen begonnen, wobei ein Teil des Schneidwerkes über die Grenze hinausragt und dort leer läuft. Dies wird durch die Erfassung der Lage des Arbeitsbereiches und der Arbeitsbreite laufend berücksichtigt. Die letzten Fahrspuren laufen dann oft schräg in die bereits abgeerntete Randzone ein, oder es ergibt sich eine schmalere Arbeitsbreite, und der Arbeitsbereich ist zu den Rändern des Gesamtschneidwerkes beabstandet. Alle diese Daten werden vor Ort gemessen und bei der Erfassung berücksichtigt und auch dann, wenn in diesem Bereich und diesem benachbart eine unbearbeitbare Zone liegt, wird dort durch den Grenztest die innere Grenzlage erkannt.

Statt einer Abstandsgrenzwertprüfung benachbarter Fahrspuren wird alternativ eine Abstandsgrenzwertprüfung von in beliebiger Folge erhobenen Meßpunktkoordinaten vorgenommen, indem für alle Punktepaare benachbarter Punkte geprüft wird, ob diese durchsetzende Testkreise jeweils mindestens einen weiteren Meßpunkt einschließen. Ist dies nicht der Fall, handelt es sich um zwei Grenzpunkte, und der betreffende Testkreis liegt auf der Grenzseite. Die Bemessung des Testkreisradius richtet sich wieder nach dem gewöhnlichen Meßpunkteabstand, der etwa der vorbeschriebenen Arbeitsbreite entspricht. Es wird weiter davon ausgegangen, daß der Abstand der Meßpunkte in den verschiedenen Richtungen ähnlich ist, ansonsten muß der Toleranzzuschlag angemessen gewählt werden oder eine geeignete Testarealform, z. B. eine Ellipse, gewählt werden, deren Achsenlängen jeweils den Abständen der Meßpunkte in beiden Richtungen mit einem Tolerenzzuschlag angemessen sind und wobei die Achsen der Punktanordnung entsprechend orientiert sind. Der Abstand der Meßpunkte bei der Erfassung ergibt sich gewöhnlich abhängig von der Fahrgeschwindigkeit, da die Koordinatensignale jeweils in einem festen Zeittakt übermittelt werden.

Da die Punkt- oder Fahrspurabstandsprüfungen auch solche Bereiche ein- oder ausgrenzen, für die aus technischen, z. B. empfangstechnischen, Gründen keine Koordinatenwerte gespeichert werden konnten, ist es vorgesehen, entweder bei der Datenerfassung entsprechende Merkposten vom Bediener oder automatisch speichern zu lassen oder eine Zwischenmeldung über die Ermittlung solcher Erfassungsinseln auszugeben und vom Bediener eine Entscheidung über die Einbeziehung oder Ausscheidung des Bereiches in die weitere Zumessungsprozedur anzufordern.

Die Beschreibung der rechnerischen Prüfoperation mittels der Testareale, Testkreise oder Testellipsen dient einer Veranschaulichung; es müssen jedoch nicht Kreisgleichungen oder Ellipsengleichungen benutzt werden, sondern es können auch die Abstände der benachbarten Punkte mit Kreis- oder Dreiecksfunktionen berechnet und geprüft werden.
- Fig. 1: zeigt einen grenznahen Bereich eines Schlages,
- Fig. 2: zeigt einen weiteren Bereich mit Fahrspuren.

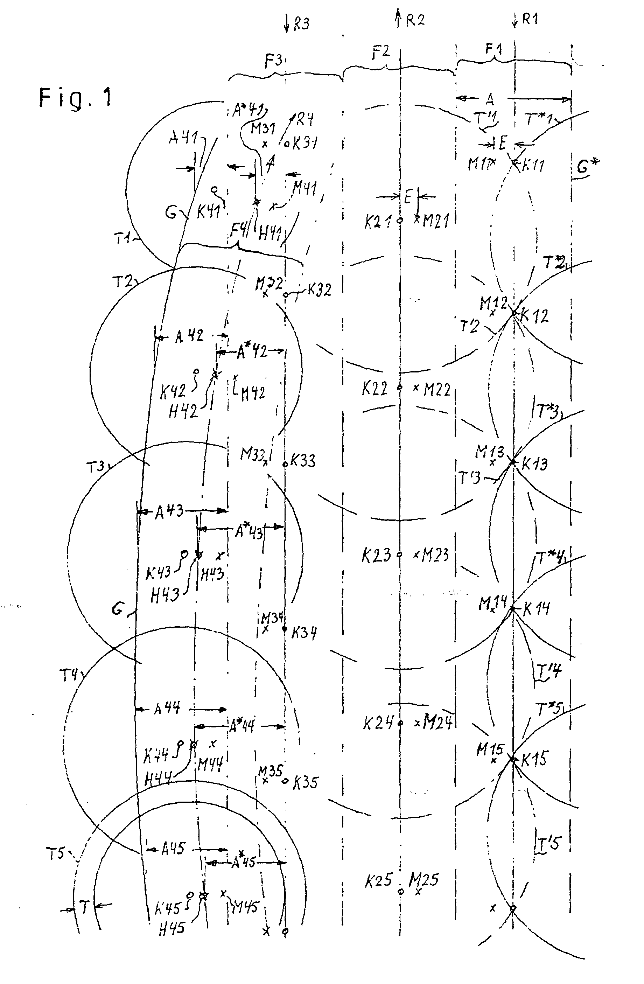

Fig. 1 zeigt Fahrspuren (F1 - F4) im grenznahen Bereich. Die benachbarten Fahrspuren weisen jeweils entgegengesetzte Fahrrichtungen (R1 - R4) auf. Die Meßpunkte (M11 - M15; - M41 - M45) sind an den tatsächlichen Ortungspunkten eingezeichnet.

Da die Antenne an dem Erhebungsfahrzeug eine exzentrische Lage (E) zu dessen Mittenachse aufweist, sind vorteilhaft die gespeicherten Ortskoordinaten (K11 - K15; K31 - K35) auf die Fahrzeugmitte korrigiert, da in den grenzentfernten Fahrspuren (F1 - F3) die volle Arbeitsbreite (A) genutzt wurde.

Die grenzseitig gelegene Fahrspur (F4) weist eine verringerte, veränderliche, lokale Arbeitsbreite (A41 - A45) auf, die außerdem exzentrisch liegt, da das Erhebungsfahrzeug den Reststreifen entlang der Grenze (G) bearbeitete. Hier sind die gespeicherten Ortskoordinaten (K41 - K45) auf die Mitte des tatsächlichen Arbeitsbereiches bezogen gespeichert.

Die Prüfung, ob eine Grenzlage vorliegt, wird von den gespeicherten Ortskoordinaten (K41 - K45) unter Berücksichtigung der zugehörigen halben gespeicherten lokalen Arbeitsbreite (A41- A45) und der halben maximalen Arbeitsbreite (A) sowie des Toleranzzuschlages (T) vorgenommen. Dementsprechend sind Testkreise (T1 - T5) um die gespeicherten Ortskoordinaten (K41 - K45) eingezeichnet, die nur auf einer Seite eine benachbarte Fahrspur (F3) schneiden, wodurch deren Grenzlage zur anderen Seite angezeigt ist.

Der bestmöglich angenäherte Grenzverlauf (G) wird um aus den stets mit Toleranzen behafteten gespeicherten grenzseitigen Ortskoordinaten (K41 - K45) und der jeweils halbierten, zugehörigen gespeicherten lokalen Arbeitsbreite (A41 - A45) durch einen geeigneten Algorithmus ermittelt.

Die Bestimmung der lokalen Arbeitsbreite (A41 - A45) wird vor Ort entweder automatisch vorgenommen, indem das Signal eines Bestandsgrenzsensors am Erhebungsfahrzeug genutzt wird, der oft auch zur automatischen Lenkung des Fahrzeuges und/oder zur Durchsatzregelung dient, oder durch einen Bediener laufend bei Änderungen eingegeben wird. Vorzugsweise wird außer der Arbeitsbreite auch die Lage des jeweiligen Arbeitsbereiches innerhalb der Spur laufend bestimmt. Eine besonders einfache Berücksichtigung dieser Lageinformation für die Weiterverarbeitung ergibt sich, wenn die Lage der gemessenen Koordinaten auf die Lage des Arbeitsbereiches zentriert korrigiert abgespeichert wird. Die Korrektur erfolgt senkrecht zur jeweiligen Fahrtrichtung. Es muß also keine zusätzliche Größe gespeichert werden.

Alternativ wird die Arbeitsbreite (A41 - A45), wenn sie nicht miterfaßt wird, aus der Konvergenz der benachbarten Fahrspuren errechnet. Es sind dann die Hilfsortskoordinaten (H41 - H45) jeweils zentriert auf die volle Arbeitsbreite abgespeichert.

Der Abstand (A*41 - A*45) der Hilfsortskoordinaten der benachbarten Fahrspur (F3) wird jeweils errechnet; er entspricht der lokalen Arbeitsbreite (A41 - A45) im Rahmen der meßtechnischen und rechnerischen Toleranzen. Der bestgenäherte Grenzverlauf (G) ist dementsprechend um die halbe maximale Arbeitsbreite (A) neben der Folge der grenzseitigen Hilfsortskoordinaten (H41 - H45) zu ermitteln.

Ein weiteres Verfahren zur Ermittlung grenzseitiger Ortskoordinaten (K11 - K15) ist durch die Testkreise (T*1 - T*5; T'1 - T'5) veranschaulicht. Diese Testkreise schneiden jeweils zwei benachbarte Punktkoordinaten, und der außen gelegene Testkreis ist leer und zeigt dadurch die Grenzlage der Punkte und die Seite des Verlaufs der Grenze (G*) an. Wenn die Meßpunkte in Fahrspuren geordnet erhoben sind, läßt sich die Testkreisprüfung praktisch von Punktpaar zu Punktpaar anwenden, der Testkreis also quasi an den Punkten abrollen. Wurde an einer Seite einer Fahrspur bereits im Durchlauf der benachbarten Spur die ausreichende Nachbarschaft ermittelt, so genügt es jeweils, den Test auf der anderen Seite durchzuführen.

Nachdem jeweils anschließend die bestmögliche Annäherung des Grenzverlaufs gewonnen wurde, lassen sich die erhobenen Meßwerte grenzsichtig mit einem Ausgleichsverfahren, abhängig von den Flächenanteilen in dem Koordinatenraster, den tatsächlichen Schlagflächen, die innerhalb der Grenze liegen, zumessen.

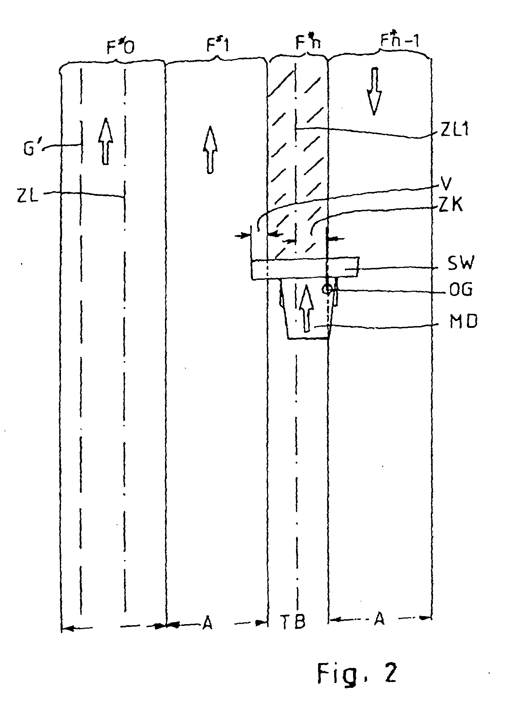

Fig. 2 zeigt ein weiteres Beispiel von Fahrspuren (F*O - F*n) in der Nähe einer Schlaggrenze (G'), die im Mähdrescher (MD) bei der Erfassung abfährt. Die Anfangsspur (F*O) überschreitet die Grenze (G') und weist nur eine Teilarbeitsbreite auf. Die gemessenen Ortskoordinaten werden deshalb auf die Zentrierlinie (ZL) des tatsächlich genutzten Arbeitsbereiches umgerechnet abgespeichert. Nachdem grenzseitig eine weitere Fahrspur (F*1) rund um den Schlag freigeschnitten wurde, werden, wie gewöhnlich, weitere Spuren mit wechselnder Richtung abgefahren, von denen die vorletzte Spur (F*n-1) noch volle Arbeitsbreite (A) hat und die letzte Spur (F*n) nur eine Teilarbeitsbreite (TB). Diese liegt mit einem seitlichen Versatz (V) zur Seitenkante des Schneidwerks (SW). Deshalb werden die Meßpunkte jeweils von der wahren Lage der Ortungsgerätemitte (OG) um einen Zentralkorrekturwert (ZK) auf, die mittig zum wahren Arbeitsbereich gedachte Zentrierlinie versetzt zusammen mit der lokalen Teilarbeitsbreite (TB) und dem erhobenen Meßwert registriert.

## Patentansprüche

1. Verfahren zur computergestützten Kartierung georeferenzierter Meßgrößen, insbesondere landwirtschaftlicher Ertragsgrößen, die in einem Schlag, insbesondere entlang von Fahrspuren (F1 - F4), mit einer Erhebungsvorrichtung, z.B. einer Erntevorrichtung, einzelnen Meßpositionen (M11 - M45) zugeordnet erhoben worden sind, wobei aus den Meßpositionen (M11 - M15; M41 - M45) eine möglichst gute Annäherung an einen Schlaggrenzverlauf (6, 6*) erzeugt wird und dann diese berücksichtigend die erhobenen Meßgrößen Knotenpunkten eines Koordinatennetzes anteilig als Repräsentationsgrößen zugemessen werden, **dadurch gekennzeichnet,**
**daß** für alle Paare benachbarter Meßpositionen (M11, M12 - M14, M15) rechnerisch entsprechend diesen berührenden Testarealen, insbesondere Testkreisen (T'1 - T'5; T*1 - T*5), geprüft wird, ob keine weitere Meßposition (M21 - M25) in dieses fällt, oder für alle Meßpositionen (M11 - M45) in Fahrspuren (F1 - F4) rechnerisch entsprechend mit diesen Meßpositionen (M41 - M45) umgebenden Testarealen, insbesondere Testkreisen (T1 - T5), geprüft wird, ob sie jeweils an mindestens einer Seite keine andere Fahrspur schneiden, wobei die Testareale (T1 - T5; T' 1 - T'5; T*1 - T*5) jeweils Testabmessungen, insbesondere einen Testradius, aufweisen, die um einen vorgesehenen Toleranzwert (T) über einem Abstand von benachbarten Meßpositionen (M11 - M45) oder Fahrspuren (F1 - F4) liegen, und daß alle solche Meßpositionen (M11 - M15; M41 - M45), bei denen das genannte Testkriterium erfüllt ist, als Grenzpositionen deklariert werden und deren Grenzseite testgemäß bestimmt wird und aus der Folge benachbarter Grenzpositionen die bestmögliche Annäherung an den äußeren und ggf. inneren Grenzverlauf bestimmt wird.

2. Verfahren nach Anspruch 1, **dadurch gekennzeichnet, daß** der vorgegebene Testradius zur Prüfung des Abstandes jeweils einander benachbarter Fahrspuren (F3, F4) aus einer Arbeitsbreite (A) der Erhebungsvorrichtung zuzüglich des Toleranzzuschlages (T) oder aus dem Abstand aufeinanderfolgend erfaßter Meßpositionen (M11, M12) zuzüglich des Toleranzzuschlages (T) bestimmt ist.

3. Verfahren nach Anspruch 2, **dadurch gekennzeichnet, daß** jeweils eine lokale Arbeitsbreite (A41 - A45) laufend gemessen oder von einem Bediener der Erhebungsvorrichtung angegeben wird und diese lokale Arbeitsbreite (A41 - A45) jeweils den Meßpositionen (M41 - M45) zugeordnet gespeichert wird, und aus diesen gespeicherten lokalen Arbeitsbreiten der lokale Testradius bestimmt wird.

4. Verfahren nach Anspruch 3, **dadurch gekennzeichnet, daß** die bestmögliche Annäherung des Schlaggrenzverlaufes (G) entlang der grenzseitig gelegenen Fahrspuren (F4) die lokale Arbeitsbreite (A41 - A45) berücksichtigend bestimmt wird.

5. Verfahren nach einem der vorstehenden Ansprüche, **dadurch gekennzeichnet, daß** die bestmögliche Annäherung des Testradius so vorgegeben wird, daß eine spurbezogen exzentrische Lage (E) der Meßpositionsortungsvorrichtung auf der Erhebungsvorrichtung der jeweils benachbarten Fahrspuren und deren Orientierung zueinander lokal berücksichtigt ist.

6. Verfahren nach Anspruch 5, **dadurch gekennzeichnet, daß** die jeweils gemessenen Meßpositionen (M41 - M45) die spurbezogene exzentrische Lage (E) der Meßpositionsortungsvorrichtung auf der Erhebungsvorrichtung jeweils richtungsabhängig als eine korrigierte Meßposition (K11 - K45) abgespeichert werden.

7. Verfahren nach einem der Ansprüche 4 bis 6, **dadurch gekennzeichnet, daß** die Lage der Meßpositionsortungsvorrichtung in Bezug auf die jeweilige Lage eines Arbeitsbereiches abgespeichert und ausgewertet wird.

8. Verfahren nach Anspruch 7, **dadurch gekennzeichnet, daß** die jeweils gemessenen Meßpositionen (M11 - M45) auf die Lage des jeweiligen Arbeitsbereiches zentriert abgespeichert und ausgewertet werden.

9. Verfahren nach einem der vorstehenden Ansprüche, **dadurch gekennzeichnet, daß** die bestmögliche Annäherung des Schlaggrenzverlaufs (G, G*) durch einen Einwickelalgorithmus von Graham oder ein Quickhullverfahren mit den grenzseitig gelegenen Ortskoordinaten (K11 - K15; K41 - K45) und der jeweiligen Arbeitsbreite (A; A41 - A45) ermittelt wird.

## Claims

1. A method for computer-aided mapping of geo-referenced measurement parameters, in particular agricultural yield parameters, which were ascertained in a cutting area, in particular along travel tracks (F1 - F4), by a collecting apparatus, for example a harvesting apparatus, in association with individual measuring positions (M11 - M45), wherein an approximation which is as good as possible to an area boundary configuration (6, 6*) is produced from the measuring positions (M11 - M15; M41 - M45) and then taking same into account the ascertained measurement parameters are allocated to a co-ordinate grid proportionately as representative parameters, **characterised in that**
for all pairs of adjacent measuring positions (M11, M12 - M14, M15), in accordance with those touching test areas, in particular test circles (T'1 - T'5; T*1 - T*5) a check is made by computing means as to whether no further measuring position (M21 - M25) falls into same, or for all measuring positions M11 - M45) in travel tracks (F1 - F4) corresponding to test areas, in particular test circles (T1 - T5) surrounding said measuring positions (M41 - M45) a check is made by computing means to ascertain whether they each intersect no other travel track at at least one side, wherein the test areas (T1 - T5; T'1 - T'5; T*1 - T*5) respectively have test dimensions, in particular a test radius, which are around a predetermined tolerance value (T) over a spacing from adjacent measuring positions (M11 - M45) or travel tracks (F1 - F4), and that all such measuring positions (M11 - M15; M41 - M45) in respect of which said test criterion is met are declared as boundary positions and the boundary side thereof is determined in accordance with the test and the best possible approximation to the outer and possibly inner boundary configuration is determined from the sequence of adjacent boundary positions.

2. A method according to claim 1 **characterised in that** the predetermined test radius for checking the spacing of respective mutually adjacent travel tracks (F3, F4) is determined from a working width (A) of the collecting apparatus plus the tolerance addition (D) or from the spacing of successively detected measuring positions (M11, M12) plus the tolerance addition (T).

3. A method according to claim 2 **characterised in that** a respective local working width (A41 - A45) is continuously measured or is specified by an operator of the collecting apparatus and said local working width (A41 - A45) is stored respectively associated with the measuring positions (M41 - M45) and the local test radius is determined from said stored local working widths.

4. A method according to claim 3 **characterised in that** the best possible approximation of the area boundary configuration (G) along the travel tracks (F4) disposed at the boundary side is determined having regard to the local working width (A41 - A45).

5. A method according to one of the preceding claims **characterised in that** the best possible approximation of the test radius is so predetermined that a track-related eccentric position (E) of the measuring position locating apparatus on the collecting apparatus of the respectively adjacent travel tracks and the orientation thereof relative to each other is locally taken into consideration.

6. A method according to claim 5 **characterised in that** the respectively measured measuring positions (M41 - M45) and the track-related eccentric position (E) of the measuring position locating apparatus on the collecting apparatus are respectively stored in dependence on direction as a corrected measuring position (K11 - K45).

7. A method according to one of claims 4 to 6 **characterised in that** the position of the measuring position locating apparatus in relation to the respective position of a working region is stored and evaluated.

8. A method according to claim 7 **characterised in that** the respectively measured measuring positions (M11 - M45) are stored and evaluated in centred relationship on the position of the respective working region.

9. A method according to one of the preceding claims **characterised in that** the best possible approximation of the area boundary configuration (G, G*) is ascertained by a Graham enveloping algorithm or a quick enveloping method with the location coordinates (K11 - K15; K41 - K45) disposed at the boundary side and the respective working width (A; A41 - A45).

## Revendications

1. Procédé pour la cartographie assistée par ordinateur de grandeurs mesurées géoréférencées, en particulier de grandeurs de production agricole, qui ont été collectées dans une parcelle, en particulier le long de trajets de passage (F1 - F4), avec un dispositif de collecte, par exemple un dispositif de récolte, en étant associées à des positions de mesure individuelles (M11 - M45), la meilleure approximation possible d'un tracé de limite de parcelle (G, G*) étant obtenue à partir des positions de mesure (M11 - M15 ; M41 - M45) et, en tenant compte de celle-ci, les grandeurs mesurées collectées étant ensuite attribuées proportionnellement, comme grandeurs représentatives, à des points nodaux d'un réseau de coordonnées, **caractérisé en ce que**, pour toutes les paires de positions de mesure voisines (M11, M12 - M14, M15), on vérifie par le calcul, en fonction de zones de contrôle, en particulier de cercles de contrôle (T'1 - T'5 ; T*1 - T*5) touchant celles-ci, qu'aucune autre position de mesure (M21 - M25) ne s'y trouve ou, pour toutes les positions de mesure (M11 - M45) sur les trajets de passage (F1 - F4), on vérifie par le calcul, en fonction de zones de contrôle, en particulier de cercles de contrôle (T1 - T5) entourant ces positions de mesure (M41 - M45), qu'elles ne coupent aucun autre trajet de passage sur au moins un côté, les zones de contrôle (T1 - T5 ; T'1 - T'5 ; T*1 - T*5) présentant des dimensions de contrôle, en particulier un rayon de contrôle, qui sont supérieures d'une valeur de tolérance prévue (T) à l'écartement de positions de mesure (M11 - M45) ou de trajets de passage (F1 - F4) voisins, et **en ce que** toutes ces positions de mesure (M11 - M15 ; M41 - M45) pour lesquelles le critère de contrôle indiqué est rempli sont déclarées positions limites et leur côté limite est déterminé par contrôle, et la meilleure approximation possible du tracé de limite extérieur et éventuellement intérieur est réalisée à partir de la série de positions limites voisines.

2. Procédé selon la revendication 1, **caractérisé en ce que** le rayon de contrôle prédéfini servant à contrôler l'écartement de deux trajets de passage voisins (F3, F4) est déterminé à partir d'une largeur de travail (A) du dispositif de collecte, augmentée de la majoration de tolérance (T), ou à partir de l'écartement de deux positions de mesure détectées successivement (M11, M12), augmenté de la majoration de tolérance (T).

3. Procédé selon la revendication 2, **caractérisé en ce que** des largeurs de travail locales respectives (A41 - A45) sont mesurées en continu et entrées par un opérateur dans le dispositif de collecte, et ces largeurs de travail locales (A41 - A45) sont mémorisées en étant associées à chacune des positions de mesure (M41 - M45), et le rayon de contrôle local est déterminé à partir de ces largeurs de travail locales mémorisées.

4. Procédé selon la revendication 3, **caractérisé en ce que** la meilleure approximation possible du tracé de limite de parcelle (G) est déterminée le long des trajets de passage (F4) situés côté limite en tenant compte de la largeur de travail locale (A41 - A45).

5. Procédé selon une des revendications précédentes, **caractérisé en ce que** la meilleure approximation possible du rayon de contrôle est prédéfinie de façon à tenir compte localement du positionnement excentré (E) par rapport au trajet du dispositif de repérage de position de mesure sur le dispositif de collecte des trajets de passage voisins concernés et de leur orientation réciproque.

6. Procédé selon la revendication 5, **caractérisé en ce que** les positions de mesure respectives mesurées (M41 - M45) et le positionnement (E), excentré par rapport au trajet, du dispositif de repérage de position de mesure sur le dispositif de collecte, sont mémorisés chaque fois en fonction de la direction, en tant que position de mesure corrigée (K11 - K45).

7. Procédé selon une des revendications 4 à 6, **caractérisé en ce que** le positionnement du dispositif de repérage de position de mesure par rapport au positionnement respectif de la zone de travail est mémorisé et analysé.

8. Procédé selon la revendication 7, **caractérisé en ce que** les positions de mesure mesurées (M11 - M45) sont mémorisées et analysées en étant centrées sur le positionnement de chaque zone de travail.

9. Procédé selon une des revendications précédentes, **caractérisé en ce que** la meilleure approximation possible du tracé de limite de parcelle (G, G*) est obtenue à l'aide d'un algorithme d'enveloppe de Graham ou d'un procédé de Quickhull avec les coordonnées locales situées côté limite (K11 - K15 ; K41 - K45) et avec la largeur de travail respective (A ; A41 - A45).
